# EUROPEAN PATENT APPLICATION

(11) **EP 3 945 252 A1**
(43) Date of publication of application: **02.02.2022**
(21) Application number: 20776731.0
(22) Date of filing: 25.02.2020
(51) Int. Cl.: F24F 3/044, F24F 3/14, F24F 13/02, F24F 1/029, F24F 1/0358

(54) **LOW-HUMIDITY AIR SUPPLY DEVICE**

(30) Priority: 28.03.2019 JP 2019062846
(71) Applicant: Nihon Spindle Manufacturing Co., Ltd., Amagasaki-shi, Hyogo 661-8510 (JP)
(72) Inventor: MASUDA, Katsuhiro, Amagasaki-shi, Hyogo 661-8510 (JP); UEDA, Akira, Amagasaki-shi, Hyogo 661-8510 (JP); YAMAGUCHI, Masafumi, Amagasaki-shi, Hyogo 661-8510 (JP)
(74) Representative: Louis Pöhlau Lohrentz
(86) International application number: PCT/JP2020/007368
(87) International publication number: WO 2020/195453

(57) **Abstract**

[Problem] To provide a low-humidity air supply device with which it is possible to achieve size reduction.

[Solution] A low-humidity air supply device 1 supplies low-humidity air into a clean room 100. The low-humidity air supply device 1 includes an intake portion 3 that is connected to an inside of the clean room 100 and through which air AR1 in the clean room 100 is taken in, a cooling unit 4 that cools the air AR1, a dehumidification unit 7 that dehumidifies cooled air AR2, and a supply unit 8 that is connected to the inside of the clean room 100 and through which air AR4 dehumidified by the dehumidification unit 7 is supplied into the clean room 100. The supply unit 8 is composed of a duct 81 through which the air AR4 is able to pass and that has a box shape and the duct 81 is a portion of a casing 20 that constitutes an outermost layer of the low-humidity air supply device 1.

## Description

### Technical Field

The present invention relates to a low-humidity air supply device.

### Background Art

There is a clean room where various operations can be performed in a state where an environment suitable for the operations is maintained. A device that supplies air of which the temperature and the humidity have been adjusted may be connected to the clean room (for example, refer to PTL 1). The device described in PTL 1 includes a dry type dehumidifier that sucks and dehumidifies processing air, a temperature and humidity adjustment mechanism that adjusts the air dehumidified by the dry type dehumidifier to have a predetermined temperature and a predetermined humidity, an air blower that sends the air of which the temperature and the humidity have been adjusted by the temperature and humidity adjustment mechanism, and a casing in which the dry type dehumidifier, the temperature and humidity adjustment mechanism, and the air blower are accommodated.

In the device described in PTL 1, for example, the dry type dehumidifier and the temperature and humidity adjustment mechanism are connected to each other via a discharge pipe and a communication path in order. The discharge pipe is disposed in the casing. Similar to the casing, the discharge pipe is a hollow body. Accordingly, the device described in PTL 1 has a configuration in which a hollow body is present in another hollow body. In such a configuration, a gap is formed between the hollow bodies, and the gap becomes a dead space. The dead space may be a cause of an increase in size of the device. Therefore, for example, the device is not suitable for indoor installation with a limited installation space.

### Citation List

### Patent Literature

[PTL 1] Japanese Patent No. 3280605

### Summary of Invention

### Technical Problem

An object of the present invention is to provide a low-humidity air supply device with which it is possible to achieve size reduction.

### Solution to Problem

According to an aspect of the present invention, there is provided a low-humidity air supply device which supplies low-humidity air into a dry room, the low-humidity air supply device including an intake portion that is connected to an inside of the dry room and through which air in the dry room is taken in, a cooling unit that cools the air taken in through the intake portion, a dehumidification unit that dehumidifies the air cooled by the cooling unit, and a supply unit that is connected to the inside of the dry room and through which the air dehumidified by the dehumidification unit is supplied into the dry room. At least one of the intake portion, the cooling unit, the dehumidification unit, and the supply unit is composed of a duct having a box shape through which the air is able to pass and the duct is a portion of a casing that constitutes an outermost layer of the low-humidity air supply device.

### Advantageous Effects of Invention

According to the present invention, at least the supply unit is composed of a hollow duct through which air is able to pass and that has a box shape. In addition, outer surfaces of the duct partially or entirely function as a portion of the casing of the low-humidity air supply device. Accordingly, the duct that functions as the supply unit is disposed in a space that may become a dead space in the case of the related art and thus the space can be filled, that is, the dead space can be effectively used. Such a configuration contributes to size reduction of the supply device and thus the size reduction of the supply device is achieved.

### Brief Description of Drawings

Fig. 1 is a block diagram of a main part of a low-humidity air supply device of the present invention.
Fig. 2 is a front view of the low-humidity air supply device of the present invention.
Fig. 3 is a right side view of the low-humidity air supply device of the present invention.
Fig. 4 is a cross-sectional view taken along line A-A in Fig. 2.
Fig. 5 is a cross-sectional view taken along line B-B in Fig. 2.
Fig. 6 is a view as seen in a direction along an arrow C in Fig. 2.
Fig. 7 is a cross-sectional view taken along line D-D in Fig. 4.
Fig. 8 is a cross-sectional view taken along line E-E in Fig. 5.

### Description of Embodiments

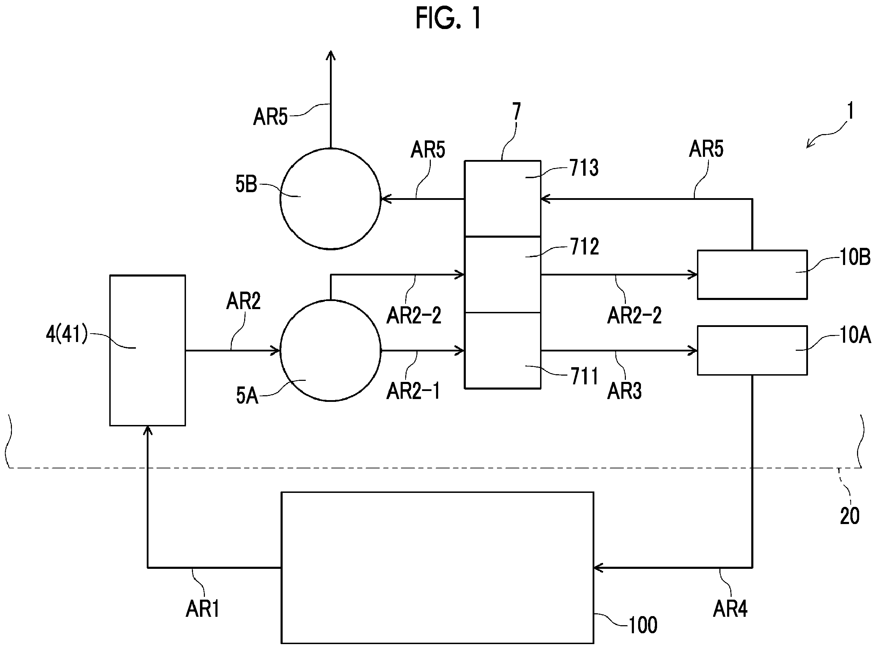

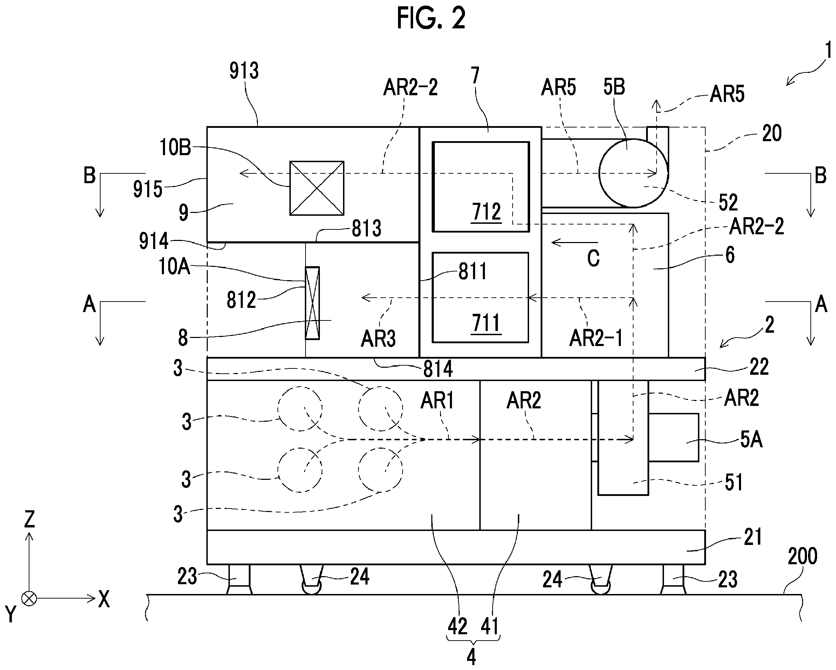

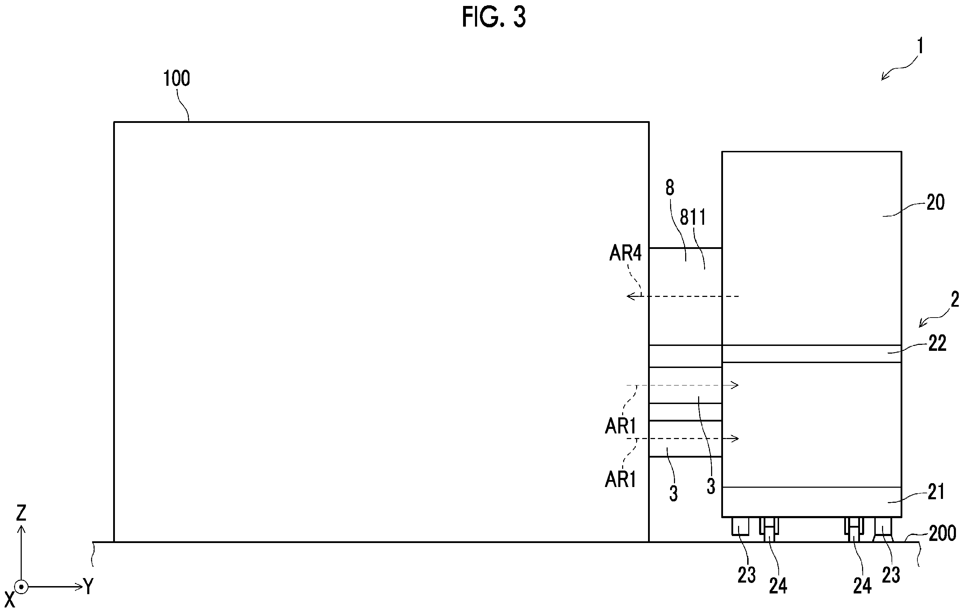

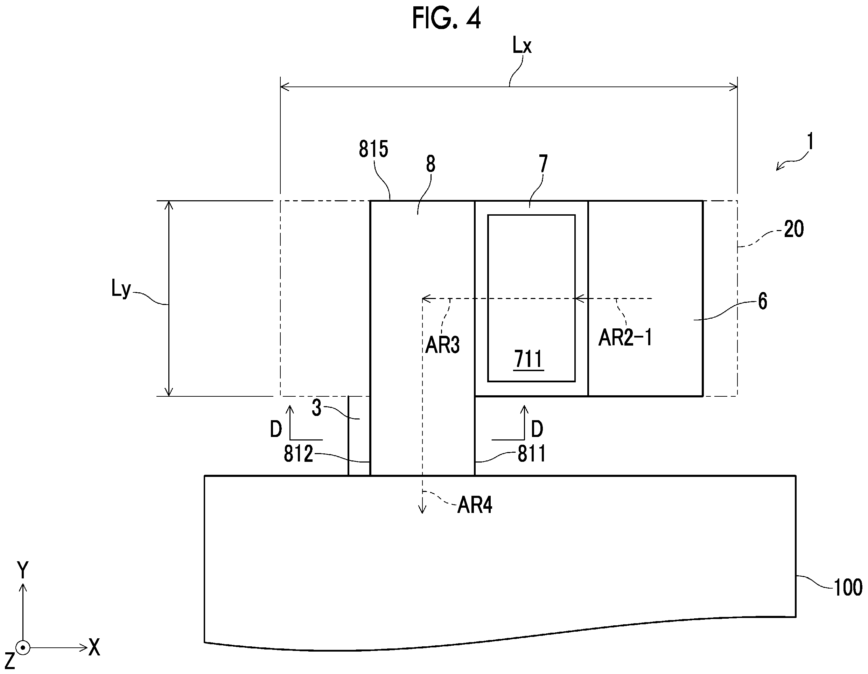

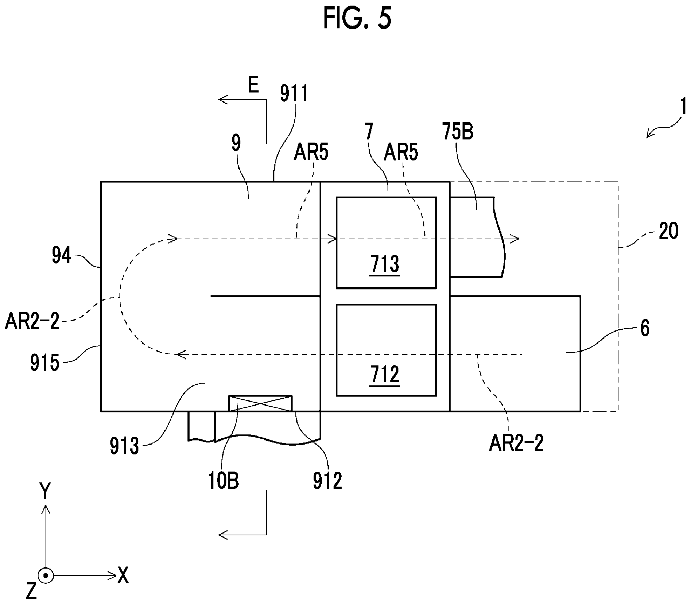

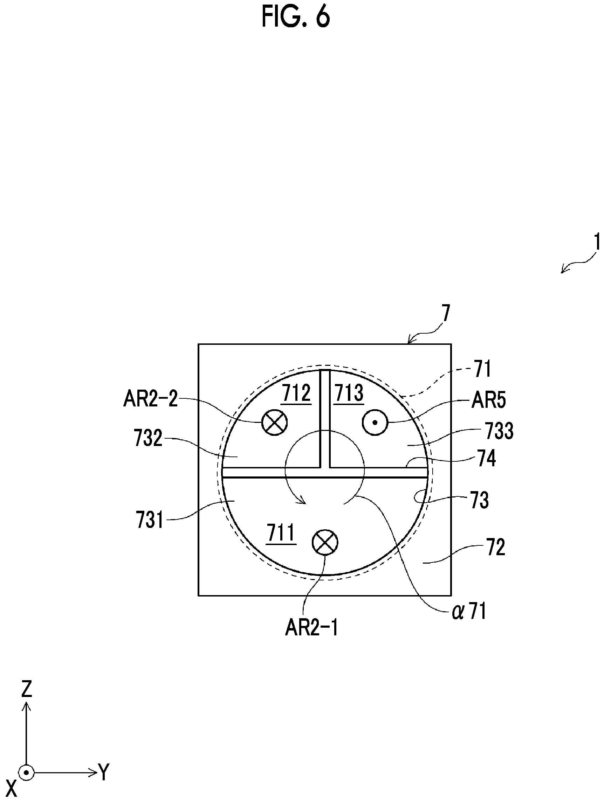

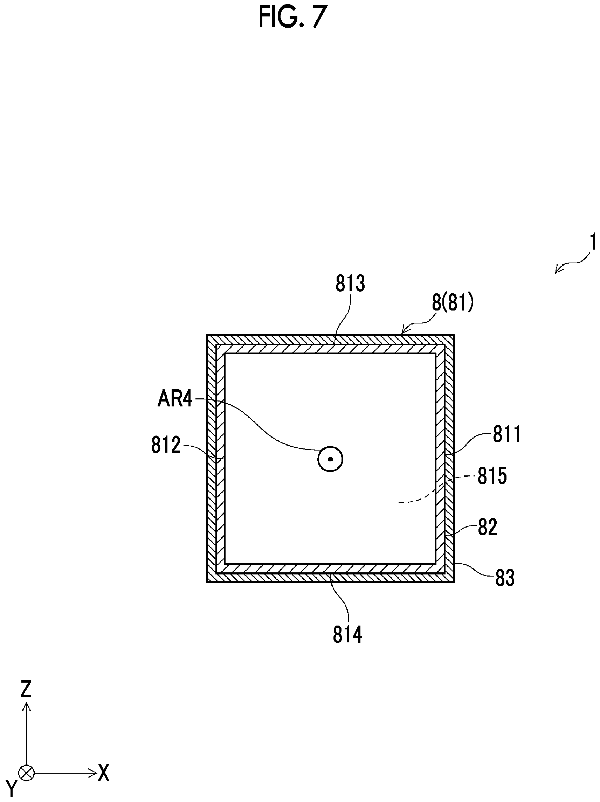

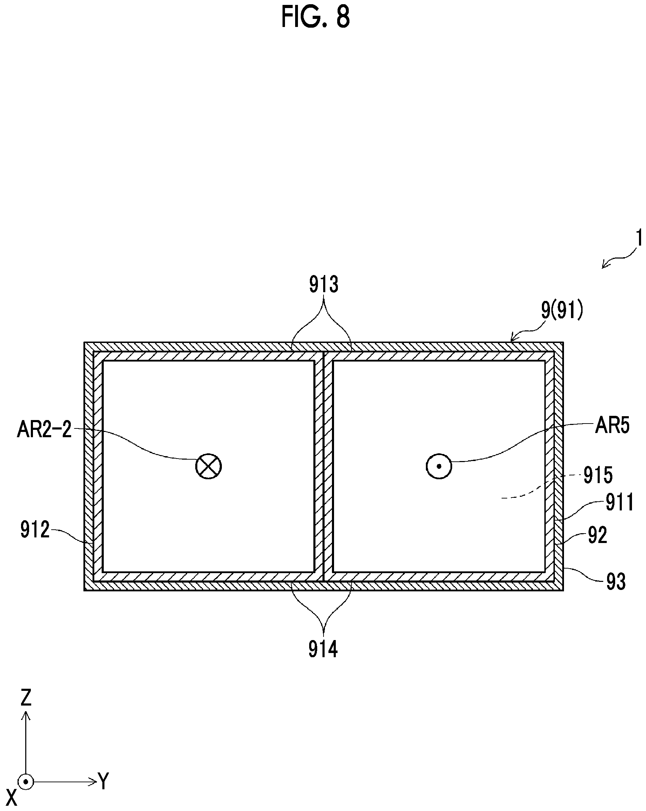

Hereinafter, a low-humidity air supply device of the present invention will be described in detail based on a preferred embodiment shown in the accompanying drawings. Fig. 1 is a block diagram of a main part of the low-humidity air supply device of the present invention. Fig. 2 is a front view of the low-humidity air supply device of the present invention. Fig. 3 is a right side view of the low-humidity air supply device of the present invention. Fig. 4 is a cross-sectional view taken along line A-A in Fig. 2. Fig. 5 is a cross-sectional view taken along line B-B in Fig. 2. Fig. 6 is a view as seen in a direction along an arrow C in Fig. 2. Fig. 7 is a cross-sectional view taken along line D-D in Fig. 4. Fig. 8 is a cross-sectional view taken along line E-E in Fig. 5. Note that, hereinafter, for the sake of convenience in description, one of the horizontal directions will be referred to as an "X-axis direction", one of the horizontal directions that is orthogonal to the X-direction will be referred to as a "Y-axis direction", and the vertical direction will be referred to as a "Z-axis direction". In addition, an upper side in Figs. 1, 3, and 5 to 7 will be referred to as an "upper side (or upper area)", and a lower side will be referred to as a "lower side (or lower area)". In addition, air is forcibly caused to flow in the low-humidity air supply device and expressions like an "upstream side" and a "downstream side" may be used based on the flow of the air.

A low-humidity air supply device (hereinafter, simply referred to as "supply device") 1 shown in Fig. 1 is a device that supplies air AR4, which is low-humidity air, into a room such that the dew-point temperature is equal to or lower than -20°C. The room is not particularly limited and examples thereof include a clean room (including dry room and dry booth) 100 and the like. Then, in the clean room 100, various operations such as a lithium ion battery manufacturing operation and an operation of processing a material (powder or like) that dislikes moisture in air can be performed in a state where an environment suitable for the operations is maintained.

As shown in Figs. 2 to 5, the supply device 1 includes a frame 2, intake portions 3, a cooling unit 4, a suction unit 5A, a divergence portion 6, a dehumidification unit 7, and a supply unit 8, a first heating unit 10A, a relay portion 9, a second heating unit 10B, a discharge unit 5B, and a casing 20. Hereinafter, the configuration of each part will be described.

The frame 2 is a support body that collectively supports the intake portions 3, the cooling unit 4, the suction unit 5A, the divergence portion 6, the dehumidification unit 7, the supply unit 8, the first heating unit 10A, the relay portion 9, the second heating unit 10B, the discharge unit 5B, and the casing 20.

As shown in Fig. 2, the frame 2 includes a lower frame 21 and an upper frame 22 that is disposed above the lower frame 21 while being separated from the lower frame 21. As described above, the frame 2 has a two-stage configuration with a lower stage and an upper stage. Note that, the number of stages of the frame 2 is not limited to two and may be, for example, three or more.

In addition, the frame 2 includes a plurality of leg portions (adjuster feet) 23 installed for the lower frame 21 and a plurality of casters 24. With the leg portions 23, it is possible to fix the supply device 1 to a desired position on a floor surface 200 after the supply device 1 is installed on the position. With the casters 24, it is possible to move the supply device 1 in a desired direction on the floor surface 200 in a state where the supply device 1 fixed by the leg portions 23 is released.

The casing 20 is a cover member that constitutes the entire outermost layer of the low-humidity air supply device 1. The casing 20 can cover the frame 2, the intake portions 3, the cooling unit 4, the suction unit 5A, the divergence portion 6, the dehumidification unit 7, the supply unit 8, the first heating unit 10A, the relay portion 9, the second heating unit 10B, and the discharge unit 5B. The casing 20 includes, for example, a plurality of cover members and each cover member is fixed to the frame 2 through screwing or the like.

The intake portions 3 are intake ports through which air AR1 in the clean room 100 is taken in. As shown in Figs. 2 and 3, the intake portion 3 is disposed above the lower frame 21 of the frame 2 and protrudes toward a negative side in the Y-axis direction in a circular tube-like shape. Accordingly, the intake portions 3 can be connected to the inside of the clean room 100. In addition, the air AR1 in the clean room 100 can be taken in through the intake portions 3 with the suction unit 5A operated. Note that, the shape of the intake portion 3 is not limited to the circular tube-like shape.

The number of the intake portions 3 is four in a configuration shown in Fig. 2. However, the number of the intake portions 3 is not limited thereto and may be one, two, three or five or more. In addition, in a case where the air AR1 in the clean room 100 is to be taken in, all of the four intake portions 3 may be used or one, two, or three of the four intake portions 3 may be used. As described above, in the supply device 1, it is possible to select whether or not to use each intake portion 3.

The cooling unit 4 is connected to downstream sides of the intake portions 3. The cooling unit 4 is disposed on the lower frame 21 of the frame 2 and cools the air AR1 taken in through the intake portions 3. Through the cooling operation, the air AR1 becomes air AR2.

The cooling unit 4 includes a cooling coil 41 through which a refrigerant (not shown) passes and a control unit (cryocooler) 42 that controls the supply amount and the supply speed of the refrigerant to the cooling coil 41.

The cooling coil 41 is composed of a pipe body (not shown) wound in a coil shape. In addition, when the air AR1 comes into contact with a pipe body through which the refrigerant has passed, the air AR1 is cooled and becomes the air AR2. In addition, the control unit 42 can adjust the cooling capacity of the cooling coil 41, that is, the degree of cooling with respect to the air AR1.

The suction unit 5A is connected to a downstream side of the cooling coil 41, that is, a positive side in the X-axis direction. The suction unit 5A is disposed on the lower frame 21 of the frame 2 together with the cooling unit 4. The suction unit 5A can apply a suction force for taking in the air AR1 in the clean room 100 to the intake portions 3 and direct the air AR1 to the downstream side as it is.

The suction unit 5A includes a fan 51 that rotates when being energized. The air AR1 and the air AR2 obtained when the air AR1 is cooled can be forcibly directed to a downstream side (dehumidification unit 7 side) from an upstream side (cooling unit 4 side) smoothly with the fan 51 rotating. Note that, although depending on the rotation rate of the fan 51, the air AR2 may be further cooled by the fan 51 and dehumidified.

The divergence portion 6 is connected to a downstream side of the suction unit 5A, that is, a positive side in the Z-axis direction. The divergence portion 6 is disposed on the upper frame 22 of the frame 2. The air AR2 branches into two different directions. Hereinafter, one of branches of the air AR2 branching at the divergence portion 6 will be referred to as "air AR2-1" and the other of the branches of the air AR2 will be referred to as "air AR2-2".

The dehumidification unit 7 is connected to a downstream side of the divergence portion 6, that is, a negative side in the X-axis direction. Both of the air AR2-1 and the air AR2-2 pass through the dehumidification unit 7. In addition, the air AR2-1 is dehumidified. On the other hand, the air AR2-2 is used to maintain a dehumidification function of the dehumidification unit 7.

As shown in Fig. 6, the dehumidification unit 7 includes an adsorbent 71 that adsorbs moisture and a housing 72 that accommodates the adsorbent 71.

The adsorbent 71 has a columnar shape or a disc shape, and the center axis thereof is disposed to be parallel to the X-axis direction. The adsorbent 71 contains, for example, silica gel, zeolite, or the like and can adsorb moisture contained in the air AR2-1 when the air AR2-1 passes through a dehumidification region 711 of the adsorbent 71 which will be described later. Accordingly, the air AR2-1 can be dehumidified. Through the dehumidification, the air AR2-1 becomes air AR3.

The housing 72 supports the adsorbent 71 such that the adsorbent 71 can be rotated counterclockwise (arrow α₇₁) in Fig. 6. In addition, the housing 72 includes a circular opening portion 73 that is open on each of a positive side and a negative side in the X-axis direction and through which the adsorbent 71 is exposed and a rib 74 that divides the opening portion 73 into three regions. The regions of the opening portion 73 divided by the rib 74 will be referred to as a "first region 731", a "second region 733", and a "third region 732" in counterclockwise order from a lower region in Fig. 6.

In addition, the adsorbent 71 faces any of the first region 731 to the third region 732 in accordance with the angle of rotation. A portion of the adsorbent 71 where the adsorbent 71 faces the first region 731 is the dehumidification region 711 where dehumidification with respect to the air AR2-1 is performed. At a portion of the adsorbent 71 where the adsorbent 71 faces the second region 733, air AR5 obtained through a heating operation performed by the second heating unit 10B passes through a restoring region 713 so that moisture in the adsorbent 71 is evaporated and a dehumidification function of the adsorbent 71 is restored. A portion of the adsorbent 71 where the adsorbent 71 faces the third region 732 is a precooling region 712 through which the air AR2-2 passes so that the adsorbent 71 is cooled.

As described above, even in a case where the adsorbent 71 of the dehumidification unit 7 adsorbs moisture and the dehumidification function thereof deteriorates, the moisture adsorbed by the adsorbent 71 can be evaporated by means of the air AR5 heated by the second heating unit 10B. Accordingly, the dehumidification function of the dehumidification unit 7 is restored, so that re-dehumidification can be performed and dehumidification can be repeatedly performed stably.

The supply unit 8 is connected to a downstream side of the dehumidification region 711 of the dehumidification unit 7, that is, a negative side in the X-axis direction. The supply unit 8 is connected to the inside of the clean room 100 on a side opposite to the dehumidification unit 7. The supply unit 8 is disposed on the upper frame 22 of the frame 2. In addition, in the supply unit 8, the first heating unit 10A composed of a heater that generates heat when being energized is disposed. The air AR3 dehumidified by the dehumidification unit 7 is heated by the first heating unit 10A while passing through the supply unit 8 and becomes air AR4. The air AR4 is supplied into the clean room 100. The air AR4 is low-humidity air supplied such that the dew-point temperature is equal to or lower than -20°C. As described above, the supply device 1 can quickly and stably supply the air AR4, of which the humidity and the temperature have been adjusted, into the clean room 100.

As shown in Fig. 7, the supply unit 8 is composed of a box-shaped hollow duct 81 through which the air AR4 (air AR3) can pass. The cross-sectional shape of the duct 81 is quadrangular in a configuration shown in Fig. 7 but is not limited thereto.

In the present embodiment, the duct 81 includes an outer surface 811 that faces a positive side in the X-axis direction, an outer surface 812 that faces a negative side in the X-axis direction, an outer surface 813 that faces a positive side in the Z-axis direction, an outer surface 814 that faces a negative side in the Z-axis direction, and an outer surface 815 that faces a positive side in the Y-axis direction. In addition, as shown in Figs. 2 to 4, any of the outer surfaces 811 to 815 partially or entirely functions as a portion of the casing 20 of the supply device 1, that is, serves as a portion of the casing 20 (is portion of casing 20) . Accordingly, the duct 81 that functions as the supply unit 8 is disposed in a space that may become a dead space in the case of the related art and thus the space can be filled, that is, the dead space can be effectively used. Such a configuration contributes to size reduction of the supply device 1.

The duct 81 includes a duct main body 82 made of a metal material and a heat insulating layer 83 that is disposed outside the duct main body 82 and is made of a heat insulating material. Accordingly, it is possible to supply the air AR4 into the clean room 100 while preventing a change in temperature of the air AR4 passing through the duct 81, that is, the supply unit 8.

The metal material constituting the duct main body 82 is not particularly limited and, for example, various metal materials such as aluminum and stainless steel can be used. The heat insulating material constituting the heat insulating layer 83 is not particularly limited and, for example, various heat insulating materials such as glass wool and rock wool can be used.

As shown in Fig. 5, the relay portion 9 is connected to a downstream side of the precooling region 712 of the dehumidification unit 7, that is, a negative side in the X-axis direction. The relay portion 9 is connected to the restoring region 713 of the dehumidification unit 7 on a side opposite to the precooling region 712. The relay portion 9 is disposed on the upper frame 22 of the frame 2. In addition, in the relay portion 9, the second heating unit 10B composed of a heater that generates heat when being energized is disposed. Such a relay portion 9 is a flow path, through which air A2-2 branching off via the divergence portion 6 flows to the dehumidification unit 7 and the second heating unit 10B in this order and reaches the dehumidification unit 7 again, that is, returns thereto. The air A2-2 is heated by the second heating unit 10B while passing through the relay portion 9 and becomes the air AR5. The air AR5 evaporates moisture in the adsorbent 71 by passing through the restoring region 713 of the dehumidification unit 7 to dry the adsorbent 71. Accordingly, the dehumidification function is restored at the restoring region 713.

As shown in Fig. 8, the relay portion 9 is composed of a box-shaped hollow duct 91 through which the air AR2-2 (air AR5) can pass. The cross-sectional shape of the duct 91 is quadrangular in a configuration shown in Fig. 8 but is not limited thereto. In addition, as shown in Fig. 5, the duct 91 includes a direction changing portion 94 that changes the direction of the air AR2-2 while the air AR2-2 is passing therethrough, the direction changing portion 94 being on the negative side in the X-axis direction.

In the present embodiment, the duct 91 includes an outer surface 911 that faces the positive side in the Y-axis direction, an outer surface 912 that faces the negative side in the Y-axis direction, an outer surface 913 that faces the positive side in the Z-axis direction, an outer surface 914 that faces the negative side in the Z-axis direction, and an outer surface 915 that faces the negative side in the X-axis direction. In addition, as shown in Figs. 2 to 4, the outer surface 911, the outer surface 912, the outer surface 913, and the outer surface 915 from among the outer surfaces 911 to 915 partially or entirely function as a portion of the casing 20 of the supply device 1. Accordingly, similar to the above description, the duct 91 that functions as the relay portion 9 is disposed in a space that may become a dead space in the case of the related art and thus the space can be filled, that is, the dead space can be effectively used. Accordingly, size reduction of the supply device 1 can be further achieved in combination with the duct 81.

The duct 91 includes a duct main body 92 made of a metal material and a heat insulating layer 93 that is disposed outside the duct main body 92 and is made of a heat insulating material. Accordingly, it is possible to send the air AR5 to the restoring region 713 while preventing a change in temperature of the air AR5 passing through the supply unit 9 and temperature influence on the duct 81. Accordingly, the adsorbent 71 in the restoring region 713 can be sufficiently dried by means of the air AR5.

The discharge unit 5B is connected to a downstream side of the restoring region 713 of the dehumidification unit 7, that is, a positive side in the X-axis direction. The discharge unit 5B is disposed on the upper frame 22 of the frame 2 . The discharge unit 5B can apply a discharge force that discharges the air AR5 to the outside to a place that is upstream of the discharge unit 5B.

The discharge unit 5B includes a fan 52 that rotates when being energized. The air AR5 can be forcibly directed in a discharge direction, that is, to a downstream side smoothly with the fan 52 rotating.

As described above, the supply device 1 has a configuration with size reduction. In addition, preferably, the maximum length of the supply device 1 as seen in a plan view can be made equal to or smaller than 2000 mm. In particular, preferably, the total length L_{X} of the supply device 1 along the X-axis direction can be made equal to or smaller than 2000 mm. Furthermore, preferably, the depth Ly of the supply device 1 along the Y-axis direction can be made equal to or larger than 50% of the total length L_{X} and equal to or smaller than 75% of the total length L_{X}, for example. With such a size, it is possible to reduce an installation space (foot space) of the supply device 1 on the floor surface 200.

As described above, the frame 2 has a two-stage configuration with the lower frame 21, that is, a lower stage, and the upper frame 22, that is, an upper stage. In addition, the intake portions 3, the cooling unit 4, and the suction unit 5A are disposed above the lower frame 21. In addition, the divergence portion 6, the dehumidification unit 7, the supply unit 8, the relay portion 9, the first heating unit 10A, the second heating unit 10B, and the discharge unit 5B are disposed above the upper frame 22. With such a two-stage configuration, space saving for the supply device 1 is achieved and the mounting state thereof on the floor surface 200 is stabled.

Hereinabove, the low-humidity air supply device of the present invention has been described with the embodiment as shown in the drawings. However, the present invention is not limited thereto and each component constituting the low-humidity air supply device can be replaced with a component having any configuration that may exhibit the same function. In addition, any component may be added.

In addition, in the low-humidity air supply device 1, the supply unit 8 is composed of the duct 81 and the relay portion 9 is composed of the duct 91. However, one or more of the intake portions 3, the cooling unit 4, the suction unit 5A, the discharge unit 5B, the divergence portion 6, and the dehumidification unit 7 may also have a duct configuration like the supply unit 8 and the relay portion 9.

### Reference Signs List

- 1: Low-humidity air supply device (supply device)
- 2: Frame
- 21: Lower frame
- 22: Upper frame
- 23: Leg portion (adjuster foot)
- 24: Caster
- 3: Intake portion
- 4: Cooling unit
- 41: Cooling coil
- 42: Control unit (cryocooler)
- 5A: Suction unit
- 5B: Discharge unit
- 51: Fan
- 52: Fan
- 6: Divergence portion
- 7: Dehumidification unit
- 71: Adsorbent
- 711: Dehumidification region
- 712: Precooling region
- 713: Restoring region
- 72: Housing
- 73: Opening portion
- 731: First region
- 732: Third region
- 733: Second region
- 74: Rib
- 8: Supply unit
- 81: Duct
- 811: Outer surface
- 812: Outer surface
- 813: Outer surface
- 814: Outer surface
- 815: Outer surface
- 82: Duct main body
- 83: Heat insulating layer
- 9: Relay portion
- 91: Duct
- 911: Outer surface
- 912: Outer surface
- 913: Outer surface
- 914: Outer surface
- 915: Outer surface
- 92: Duct main body
- 93: Heat insulating layer
- 94: Direction changing portion
- 10A: First heating unit
- 10B: Second heating unit
- 20: Casing
- 100: Clean room
- 200: Floor surface
- AR1: Air
- AR2: Air
- AR2-1: Air
- AR2-2: Air
- AR3: Air
- AR4: Air
- AR5: Air
- L_{X}: Total length
- L_{Y}: Depth
- α₇₁: Arrow

## Claims

1. A low-humidity air supply device which supplies low-humidity air into a dry room, the low-humidity air supply device comprising:
an intake portion that is connected to an inside of the dry room and through which air in the dry room is taken in;
a cooling unit that cools the air taken in through the intake portion;
a dehumidification unit that dehumidifies the air cooled by the cooling unit; and
a supply unit that is connected to the inside of the dry room and through which the air dehumidified by the dehumidification unit is supplied into the dry room,
wherein at least one of the intake portion, the cooling unit, the dehumidification unit, and the supply unit is composed of a duct having a box shape through which the air is able to pass, and
the duct is a portion of a casing that constitutes an outermost layer of the low-humidity air supply device.

2. The low-humidity air supply device according to claim 1, further comprising:
a first heating unit that is disposed in the duct and heats the air passing through the duct.

3. The low-humidity air supply device according to claim 2, further comprising:
a divergence portion at which the air cooled by the cooling unit branches into directions different from the dehumidification unit; and
a second heating unit that heats air branching off via the divergence portion,
wherein the dehumidification unit includes an adsorbent that adsorbs moisture contained in the air cooled by the cooling unit and evaporates the moisture adsorbed by the adsorbent by means of the air heated by the second heating unit in a case where the adsorbent adsorbs moisture so that dehumidification can be performed again.

4. The low-humidity air supply device according to claim 3,
wherein a flow path through which the air branching off via the divergence portion reaches the dehumidification unit via the second heating unit is composed of the duct.

5. The low-humidity air supply device according to any one of claims 1 to 4,
wherein the duct includes a heat insulating layer made of a heat insulating material on an outer side.

6. The low-humidity air supply device according to any one of claims 1 to 5,
wherein the low-humidity air supply device has a multi-stage configuration including a lower stage at which the intake portion and the cooling unit are disposed and an upper stage that is positioned above the lower stage and at which the dehumidification unit and the supply unit are disposed.

7. The low-humidity air supply device according to claim 6, further comprising:
a fan that is disposed between the cooling unit and the dehumidification unit and forcibly directs air to the dehumidification unit side from the cooling unit side,
wherein the fan is disposed at the lower stage.

8. The low-humidity air supply device according to any one of claims 1 to 7,
wherein a maximum length of the low-humidity air supply device as seen in a plan view is equal to or smaller than 2000 mm.
